## Europäisches Patentamt

## European Patent Office

## Office européen des brevets

(11) Publication number: **0 127 687**
**B1**

(12) **EUROPEAN PATENT SPECIFICATION**

(45) Date of publication of patent specification: **26.09.90**

(51) Int. Cl.⁵: **G 11 B 5/09**

(21) Application number: **83903827.0**

(22) Date of filing: **06.12.83**

(86) International application number:
**PCT/JP83/00430**

(87) International publication number:
**WO 84/02417 21.06.84 Gazette 84/15**

(54) **METHOD OF RECORDING PCM SIGNAL.**

(30) Priority: **06.12.82 JP 213613/82**

(43) Date of publication of application:
**12.12.84 Bulletin 84/50**

(45) Publication of the grant of the patent:
**26.09.90 Bulletin 90/39**

(84) Designated Contracting States:
**AT CH DE FR GB LI NL**

(56) References cited:
**GB-A-1 586 221**
**GB-A-2 061 575**
**GB-A-2 082 828**
**JP-A-5 654 140**
**JP-A-5 727 410**
**US-A-4 336 612**

(73) Proprietor: **SONY CORPORATION**
**7-35 Kitashinagawa 6-Chome Shinagawa-ku**
**Tokyo 141 (JP)**

(73) Proprietor: **WILLI STUDER AG Fabrik für**
**elektronische Apparate**
**Althardstrasse 30**
**CH-8105 Regensdorf ZH (CH)**

(72) Inventor: **DOI, Toshitada Sony Corporation**
**7-35 Kitashinagawa 6-chome**
**Shinagawa-ku Tokyo 141 (JP)**
Inventor: **BRANDES, Claudia**
**Willi Studer AG Althardstrasse 30**
**CH-Regensdorf (CH)**
Inventor: **LAGADEC, Roger**
**Willi Studer AG Althardstrasse 30**
**CH-Regensdorf (CH)**

(74) Representative: **Thomas, Christopher Hugo**
**et al**
**D Young & Co 10 Staple Inn**
**London WC1V 7RD (GB)**

Courier Press, Leamington Spa, England.

# EP 0 127 687 B1

**Description**

This invention relates to a method of recording a pulse code modulated (PCM) signal.

In recording or reproducing PCM signals, coding errors occur due to defects in the recording medium, problems in recording or reproduction, noise and other disturbances. Thus an encoder is provided at the recording side to effect interleaving (data rearrangement) or addition of parity or error correcting codes, and a decoder is provided at the reproducing side to effect deinterleaving, error detection and correction, or data interpolation.

When a plurality of recording tracks are associated with each channel of single-channel or multichannel PCM signals for recording or reproduction, the signals are first passed through such an encoder, and are then distributed by switching distributor means, such as a multiplexer, to the recording heads. In this case, even when the interleaving operation is performed at the encoder in accordance with a predetermined rule, the benefits of interleaving may be reduced by the multiplexing. In addition, since the error correcting code words relate to the respective word rows, which are then allotted to a plurality of tracks, it becomes impossible to perform a normal error correction in the event that the signals of a given track are lost for a prolonged time. Moreover, the allowable limit of error occurrence is reduced.

UK patent specification GB—A—2 060 227 discloses a method of PCM signal recording wherein a single channel is distributed to a plurality of recording tracks by switching means in accordance with a predetermined matrix pattern (odd/even). The PCM signals are supplied to two groups of heads via two separate encoders, each comprising means for interleaving and for generating error correction codes. US patent specification US—A—4 336 612 discloses a system for digital signal recording wherein data of a single channel are distributed to tracks by switching means in accordance with a predetermined pattern. The distributed words are supplied to a plurality of heads via separate encoders which generate an error code, so that recording is made in a plurality of recording tracks on a recording medium.

According to the present invention there is provided a method of recording an input single-channel or multichannel PCM signal, the method comprising:

distributing the words of each channel of said input PCM signal to a plurality of sub-channels;

in each said sub-channel encoding said words using a parity generator for generating at least two kinds of parity words for correcting coding errors; and

recording said encoded words of each said channel on a respective recording track via a respective recording head; characterized by:

distributing said words of said input PCM signal to said sub-channels in accordance with a predetermined matrix pattern whereby each said sub-channel receives equal numbers of odd and even numbered words and encodes each of the divided groups of odd and even words; and

recording said tracks simultaneously through separate encoders.

The invention will now be described by way of example with reference to the accompanying drawings, throughout which like parts are referred to by like references, and in which:

Figure 1 is a schematic plan view of a track pattern;

Figure 2 shows signals recorded in data and control blocks;

Figure 3 shows a head arrangement;

Figures 4 and 5 are block diagrams showing examples of recording and reproducing systems;

Figure 6 is a block diagram of an encoder;

Figures 7 and 8 show one block and the manner of interleaving;

Figure 9 is a block diagram of a decoder; and

Figures 10 to 13 are block diagrams of recording and reproducing systems.

A fixed head type PCM sound recorder, such as described in our copending Japanese patent application 82-27410 will first be described.

It is desirable that the recording format, such as the number of tracks allotted to each channel, be standardized. However, when the PCM signals subjected to coding with the same redundancy are to be recorded with the same linear density, since the number of tracks is inversely proportional to the tape speed, it is difficult to achieve a single standardized recording format. For example, the method of recording one-channel PCM signals in one track is advantageous in that a plurality of channels can thereby be recorded, but is disadvantageous in that the recording time for a predetermined tape length becomes shorter due to the increased tape speed, or in that the tape drive system is complex in design because of the necessity to control the tape travel in a predetermined manner. On the contrary, recording one-channel PCM signals in a plurality of tracks provides for a decreased tape speed, but it is not possible to increase the number of channels.

In the example described below, the PCM signals are recorded using three kinds of recording format, having different numbers of tracks per channel.

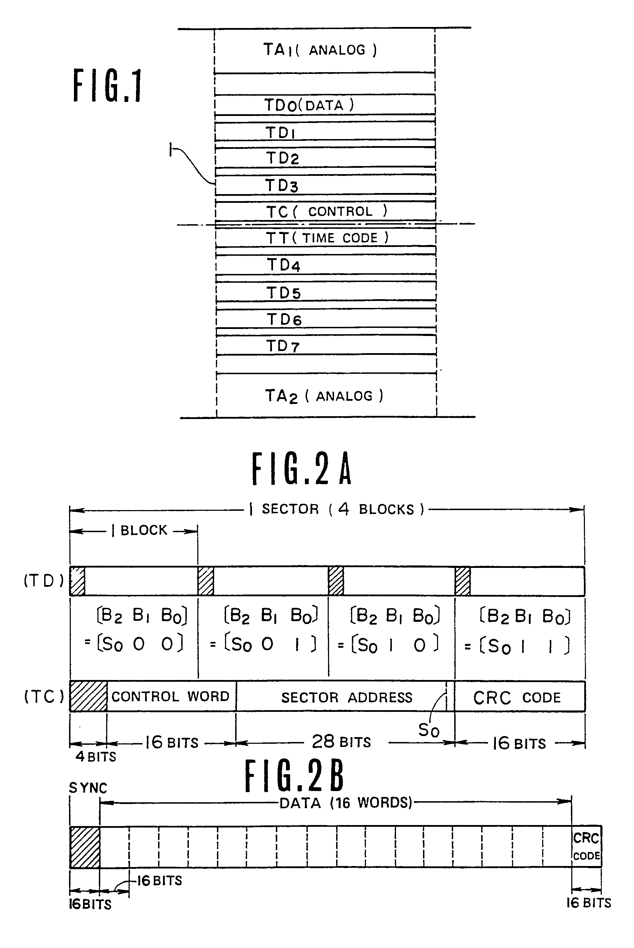

The number of data tracks that can be recorded on a magnetic tape depends on the tape width. For example, eight data tracks TD0 to TD7 are formed on a magnetic tape 1 which is ¼ inch (6.35 mm) wide, as shown in Figure 1. Tracks TA1 and TA2 for recording analogue signals are formed on the upper and lower edges of the tape 1, while the eight data tracks TD0 to TD7, a control track TC and a time code track TT are formed between the analogue tracks TA1 and TA2. The control tracks TC is positioned on the upper side of the centre (shown by a chain-dotted line) of the tape 1, and the data tracks TD0 to TD3 are located between the analogue track TA1 and the control track TC. On the lower side of the centre of the tape 1, there is positioned the time code track TT, and the data tracks TD4 to TD7 are located between the time code track TT and the analogue track TA2.

When the tape 1 is ½ inch (12.7 mm) wide, analogue tracks TA1 and TA2 are formed on the upper and lower edges of the tape 1, twelve data tracks TD0 to TD11 and the control track TC are formed on the upper half of the tape 1, and twelve data tracks TD12 to TD23 and the time code track TT are formed on the lower half of the tape 1. When the tape 1 is 1 inch (25.4 mm) wide, analogue tracks TA1 and TA2 are formed on the upper and lower edges of the tape 1, respectively, 24 data tracks TD0 to TD23 and the control track TC are formed on the upper half of the tape 1, and the time code track TT and 24 data tracks TD24 to TD47 are formed on the lower half of the tape 1.

Of course, interchangeability of different widths of the tape 1 need not be taken into consideration.

Examples of recording formats for a ¼ inch tape are shown in Table 1 below.

TABLE 1

|  | Format A | Format B | Format C |
|---|---|---|---|
| Number of channels | 8 | 4 | 2 |
| Number of tracks | 1 | 2 | 4 |
| Tape speed (cm/s) | 76.00 | 38.00 | 19.00 |

The above tape speeds correspond to a sampling frequency fs for the PCM signals of 50.4 kHz. Sampling frequencies fs of 44.1 or 32.0 kHz are also possible for tape speeds different from the above values. The PCM signal code formation and modulation type are common for the respective formats. Table 2 below shows typical relationships between the data tracks TD0 to TD7 and the associated channels for these formats.

TABLE 2

| Data track | Format A | Format B | Format C |
|---|---|---|---|
| TD0 | CH1 | CH1-A | CH1-A |
| TD1 | CH2 | CH2-A | CH2-A |
| TD2 | CH3 | CH3-A | CH1-C |
| TD3 | CH4 | CH4-A | CH2-C |
| TD4 | CH5 | CH1-B | CH1-B |
| TD5 | CH6 | CH2-B | CH2-B |
| TD6 | CH7 | CH3-B | CH1-D |
| TD7 | CH8 | CH4-B | CH2-D |

Thus, one channel is recorded as one data track, and two data tracks A and B, for the formats A and B, respectively, whereas one channel is recorded as four data tracks A, B, C and D, for the format C.

Next, the relationship between the data tracks TD, the control track TC and the time code track TT will be explained.

When the format A for recokrding one-channel signals in one track is used for a tape ¼ inch wide, the respective audio PCM signals for the eight channels CH1 to CH8 are recorded on the eight data tracks TD0 to TD7 shown in Figure 1 in the predetermined coded form.

As shown in Figure 2A, the data track TD (TD0 to TD7) and the control track TC are so placed relative to each other that the end point of one sector of the data track is in register with the end point of one sector of the control track. 4-Block data are present in one sector of the data track TD. As shown in Figure 2B, one transmission block (referred to simply as a block) is made up of 16-word data with each word consisting of sixteen bits, a data sync signal (indicated by hatching) added to the beginning of the word, and a cyclic redundancy check (CRC) code added to the end of the word. A 3-bit block address signal is inserted in the data sync signal domain, with the block address signal and the data being checked for error by the CRC code. Each sector of the control track TC is composed of a 4-bit control word (shown by hatcing), a 16-bit

3

control word, a 28-bit sector address signal and a 16-bit CRC code. The control word is used for indicating the recording format and the sampling frequency of the PCM audio signals to be recorded, while the sector address is an absolute address incrementing from an address zero, with the control word and the sector address being checked for error by the CRC code. A modulation system making possible high-density recording such as a 3 PM type is used for recording on the control track TC, whereas frequency modulation (FM) type is used for recording on the control track TC. The least significant bit S0 of the sector address signal is made to be in register with the most significant bit of each block address signal of the four blocks of the sector. Thus the block address [B2 B1 B0] is sequentially changed in the sector in the order of [S0 00], [S0 01], [S0 10] and [S0 11].

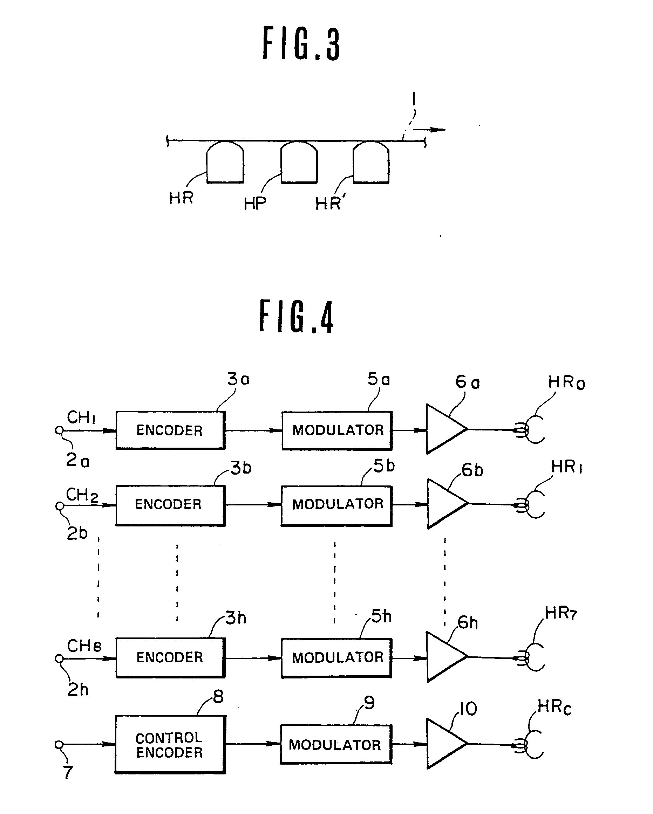

As shown in Figure 3, a recording head HR, a reproducing head HP and a recording head HR' are arranged in that order in the transporting direction of the tape 1. Each of these heads has ten in-line recording or reproducing magnetic gaps arranged transversely of the tape 1, of which eight gaps are associated with the data tracks TD0 to TD7, and the remaining two gaps are associated with the control track TC and time code track TT. The first recording on the tape 1 is by the recording head HR, while the recording head HR' is used for sync-recording, cut in/out, etc. Rewriting of the control track TC once formed by the recording head HR is not allowed, with rewriting being made only of the data tracks TD.

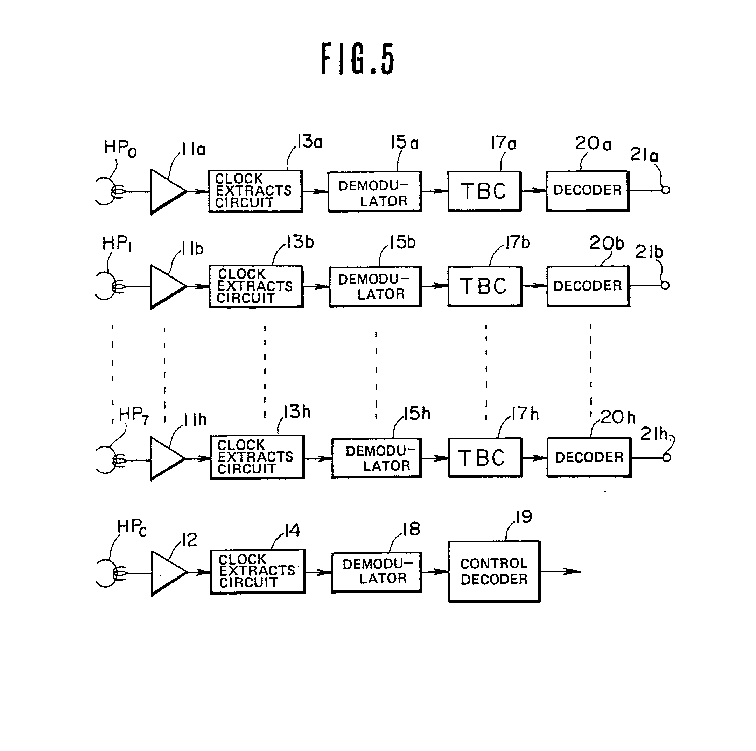

Figure 4 shows a recording system, and Figure 5 a reproducing system. Audio PCM signals for the channels CH1 to CH8 are supplied from input terminals 2a to 2h to encoders 31 to 3h, respectively. Each of the encoders 3a to 3h is provided with an interleave circuit, parity generator, CRC addition circuit, and a sync signal addition circuit etc., and forms a code block consisting of a 6-word PCM word and a 2-word parity word. A train of data from the encoders 3a to 3h is supplied to recording heads HR0 to HR7 through modulators 5a to 5h and recording amplifiers 6a to 6h. The recording heads HR0 to HR7 are arranged in-line transversely of the tape 1.

The above described signals are recorded on the control track TC by a recording control head HRc. The signals recorded on the control track TC are formed at a control encoder 8 from indicating signals and timing signals supplied from a terminal 7, and are supplied to the recording control head HRc through a modulator 9 and recording amplifier 10.

Facing the data tracks TD0 to TD7 and the control track TC of the tape 1 are a series of reproducing heads HP0 to HP7 respectively, and a reproducing control head HPc. As shown in Figure 5, the outputs of the reproducing heads HP0 to HP7 and HPc are supplied via reproducing amplifiers 11a to 11h and 12 to clock extracting circuits 13a to 13h and 14. The extracting circuits 13a to 13h and 14 extract bit clocks synchronised with the reproduced signals. The outputs of the extracting circuits 13a to 13h are supplied via demodulators 15a to 15h for data strings of the respective channels to time base correctors (TBCs) 17a to 17h. The output from the extracting circuit 14 is supplied to a demodulator 18 where reproduced control signals are obtained and are supplied to a control decoder 19.

The demodulators 15a to 15h are associated with data sync signal separating circuits.

Capstan servo signals are generated by the control decoder 19. As described in our copending Japanese patent application 82-50307, the TBCs 17a to 17h make use of the block addresses recorded in the respective data tracks TD0 to TD7 for determining the write addresses of the memories associated with the TBCs 17a to 17h. Read-out from the TBCs 17a to 17h is by reference block pulses, and a train of data free from time axis fluctuations are derived at the outputs of the TBCs 17a to 17h. The train of output data from the TBCs 17a to 17h are supplied to decoders 20a to 20h. Each of the decoders 20a to 20h is provided with a CRC checker, a deinterleave circuit, an error correction circuit and an error compensation circuit. Reproduced audio PCM signals are supplied to output terminals 21a to 21h.

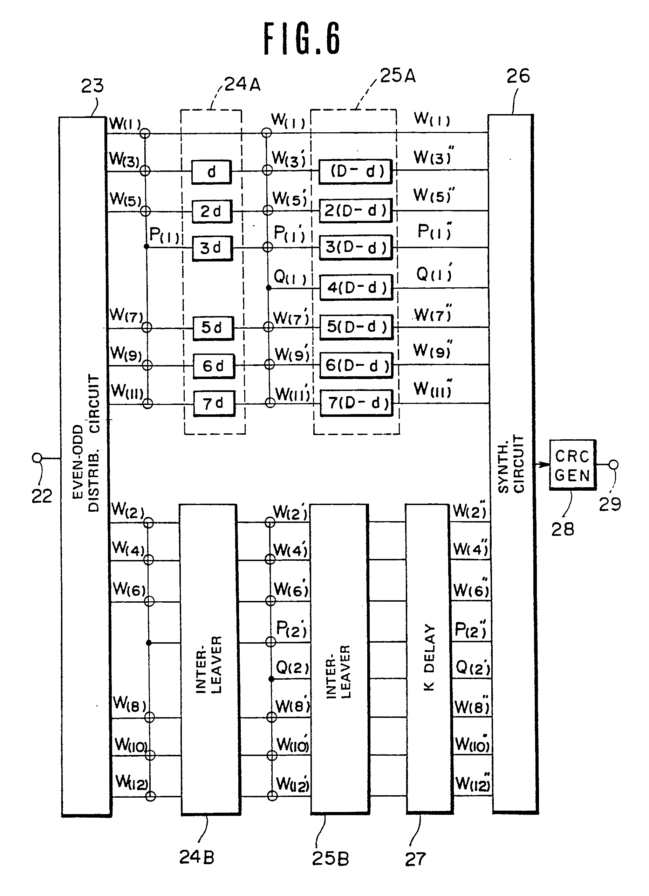

The recording system has a series of encoders 3a to 3h constructed in similar manner, as shown by way of an example in Figure 6. A train of one-channel PCM data composed of successive words Wi are supplied from a terminal 22 to an even-odd distributor 23 where they are divided into twelve groups, that is, data groups W(1), W(3), W(5), W(7), W(9) and W(11) each consisting of odd numbered words, and data groups W(2), W(4), W(6), W(8), W(10) and W(12) each consisting of even numbered words. The data groups consisting of odd numbered words and the data groups consisting of the even numbered words are subjected to error correction and encoding operations independently of one another. These data groups are composed of the following words.

$$W(1)=(W1, W13, W25, \ldots)$$
$$W(3)=(W3, W15, W27, \ldots)$$

$$\cdot$$
$$\cdot$$
$$\cdot$$

$$W(11)=(W11, W23, W35, \ldots)$$
$$W(2)=(W2, W14, W25, \ldots)$$
$$W(4)=(W4, W16, W28, \ldots)$$

$$\cdot$$
$$\cdot$$
$$\cdot$$

$$W(12)=(W12, W24, W36, \ldots)$$

4

The six words taken from data groups W(1) to W(11) consisting of odd numbered words are supplied to a modulo-2 adder for forming first parity data groups P(1). For example,

$$(P1 = W1 \oplus W3 \oplus W5 \oplus W7 \oplus W9 \oplus W11).$$

These data groups are supplied to an interleaver 24A. The interleaver 24A has delay circuits providing delays of 0, d, 2d, 3d, 5d, 6d and 7d, where d is a unit delay (block). A delay equal to 3d is added to the parity data groups P(1). The respective words taken from the respective data groups appearing at the output of the interleaver 24A are supplied to a further modulo-2 adder where the second parity data groups Q(1) are formed. These six data groups W(1) to W(11) and parity data groups P(1)', Q(1) are supplied to an interleaver 25A. The interleaver 25A has delay circuits for providing delays of 0, (D−d), 2(D−d), 7(D−d), while delays equal to 3(D−d) and 4(D−d) are allotted to the parity data groups P(1)', Q(1). The eight data groups W(1) to W"(11) produced in the interleave circuit 25A are supplied to a synthesizer 26.

The above-described interleave circuit comprises the two tandem-connected interleavers 24A, 25A. Delays 0, D, 2D, . . ., 7D are allotted to the respective data groups, and parity data are formed from words taken from the respective data groups appearing at the dividing points (cross-interleaving). The unit delays d and D are chosen so that the least common multiple of d and (D−d) exceeds 7D, so that a plurality of words contained in a code block of the first parity data and a plurality of words contained in a code block of the second parity data have a minimum of one word in common with each other. For example, d=2 and D=17.

The PCM data groups W(2) to W(12) composed of even-numbered words from the even-odd distributor 23 are error correction coded by using the cross-interleaving described above, and by means of the tandem-connected interleavers 24B and 25B, and the modulo-2 adders. The coded data groups are supplied to a delay circuit 27 causing a delay equal to K (blocks), and the data groups W(2) to W"(12) appearing at its outputs are supplied to the synthesizer 26. The purpose of affording a uniform delay of K to the data groups consisting of the even-numbered words is to perform error correction or compensation even in instances where errors occur frequently at the editing points in the case of splice editing, as described in our copending Japanese patent application 81-54140.

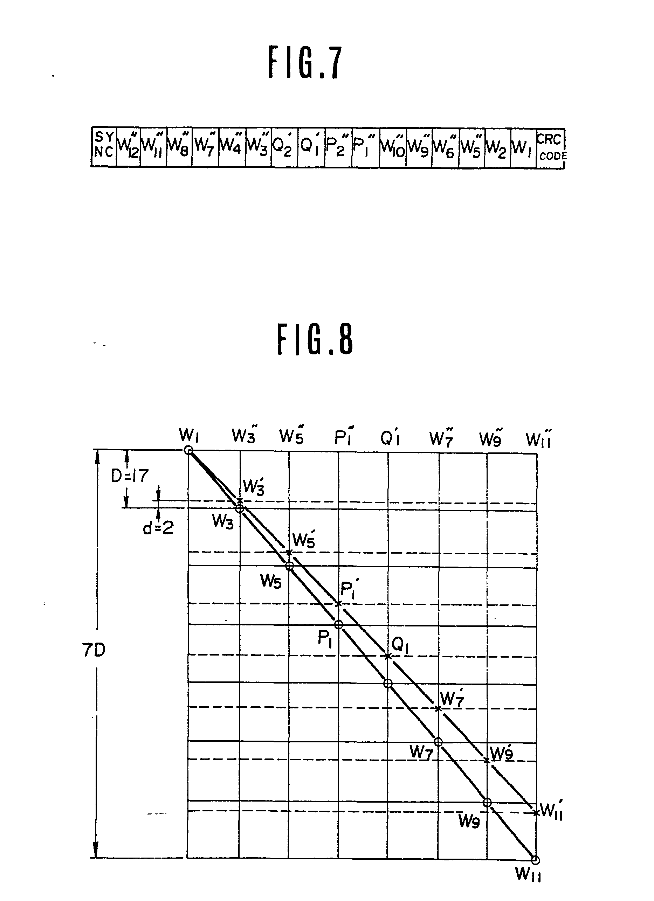

The coded data groups described above are supplied to the synthesizer 26 where the 12-word PCM data taken from the respective groups and the 4-word parity data are arranged into a one-block data to which the CRC code is added at a CRC generator 28, and the resulting signal is derived at an output terminal 29. A sync addition circuit, not shown, is provided at the output terminal 29 for forming the signal block as shown in Figure 7.

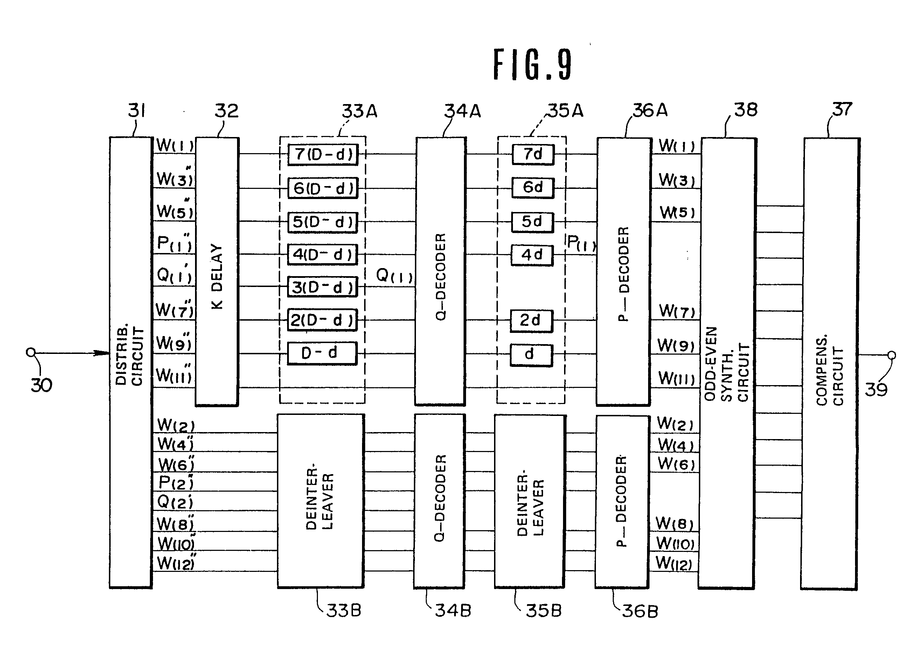

In this embodiment of the invention, the data groups consisting of the odd-numbered PCM words and the data groups consisting of the even-numbered PCM words undergo separate coding so that the interleaving manner of, for example, the odd-numbered data groups are as shown in Figure 8. As interleaved output, when the timing at which the data W1, W3", W5", P1", Q1', W7", W9" and W11" appear is used as a reference, the code blocks including PCM word W1 are formed by a plurality of words indicated by mark 0 and a plurality of words indicated by marks X. Thus the code block which gives the parity word P1 is [W1, W3, W5, P1, W7, W9], whereas the code block which gives the parity word Q1 is [W1, W3', W5', P1', Q1', W7', W9', W11']. When recorded on the tape 1, the words of these code blocks are distributed at intervals of D (17 blocks) and D−d (15 blocks). In such cross-interleaving, the length of the code series is 7D (119 blocks).

The decoders 20a to 20h in the reproducing system are constructed in similar manner as shown by way of an example in Figure 9. A train of data to be reproduced (reproduced data) is supplied from a terminal 30 to a distributing circuit 31. The train of data has already been error checked at each transmission block at a preceding stage by a CRC checker, and 1-bit error flags representative of the check results are added to the respective words. These data are distributed by the circuit 31 into a set consisting of six PCM data groups W(1) to W"(11) and two parity data groups P"(1), Q'(1), and another set consisting of the remaining six PCM data groups W(2) to W"(12) and two parity data groups P"(2), Q'(2), these sets being error-corrected independently of each other. First of all, the odd-numbered words and the associated data groups are supplied to a delay circuit 32 where they are delayed by K blocks uniformly, after which they are supplied to a deinterleaver 33A. The deinterleaver 33A causes the respective data groups to be delayed by 7(D−d), 6(D−d), 5(D−d), . . ., 0 for cancelling the delays introduced by the interleaver 25A. The output data groups supplied from the deinterleaver 33A are supplied to a Q decoder 34A where error correction is performed using the second parity data group Q(1). The data groups, except Q(1), are supplied to a deinterleaver 35A. The deinterleaver 35A is so arranged as to cause delays equal to 7d, 6d, . . ., 0 to the data groups for cancelling the delays introduced by the interleaver 24A of the recording system. The output from the deinterleaver 35A is supplied for error correction to a P decoder 36A. By the error correction eprformed at the Q decoder 34A and the P decoder 36A, an error flag for the corrected word is cleared and replaced by one indicating the absence of error. At the outputs of the P decoder 36A, there appear PCM data groups W(1) to W(11) consisting of even-numbered words.

For PCM data groups consisting of even-numbered words and the associated parity data groups W(2) to W(12), there are provided the deinterleaver 33B, the Q-decoder 34B, the deinterleaver 35B and the P-decoder 36B, so that error-corrected PCM data groups appear at the output of the P-decoder 36B. The PCM data groups W(1) to W(12) appearing at the P-decoders 36A and 36B are supplied to an even-odd synthesizer 38, the output of which is supplied to a compensating circuit 37 where the uncorrected error words are interpolated with the average value of the neighbouring correct words. The output of the compensating circuit 37 is obtained at an output terminal 39 as PCM audio signal. There are provided Q decoders 34A and 34B and P decoders 36A and 36B for performing error corrections twice for increasing the error correcting capability.

In the case of the B format in which one-channel signals are distributed in two tracks for recording, and the C format in which one-channel signals are distributed in four tracks for recording, the above-mentioned application 57-27410 discloses a way in which one-channel signals are encoded by an encoder and then distributed by demultiplexer in two or four tracks per block.

Since the error correction is performed across a plurality of tracks, should a prolonged drop-out be caused by, for example, a scratch on the tape 1, the data for one track may be lost. Should a short drop-out occur in another track, error correcting compensation may occasionally become impossible, thus making it temporarily impossible to obtain reproduced audio signals.

An embodiment of the invention in which this disadvantage may be overcome will now be described.

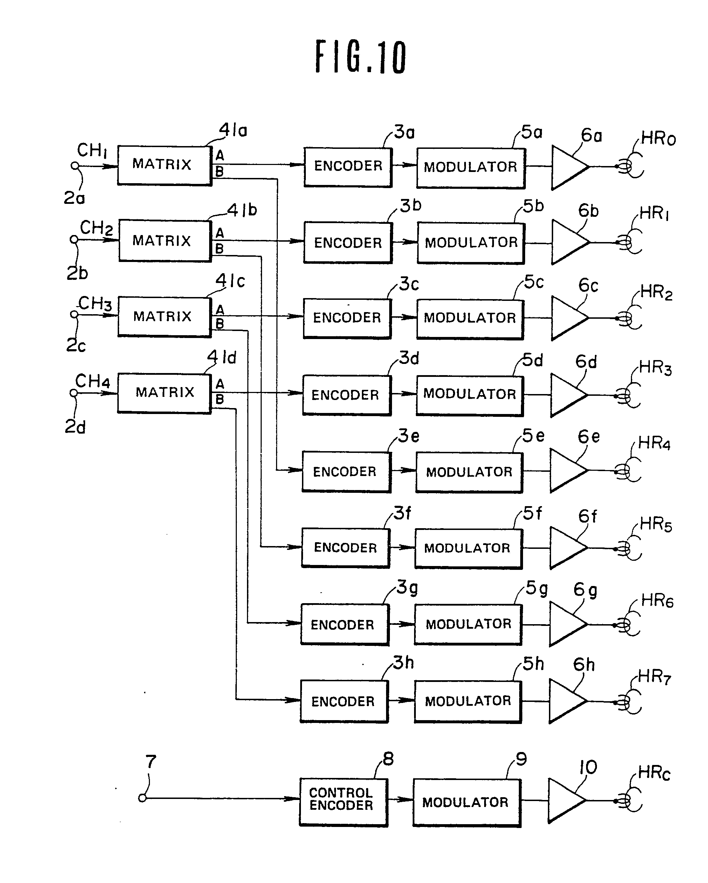

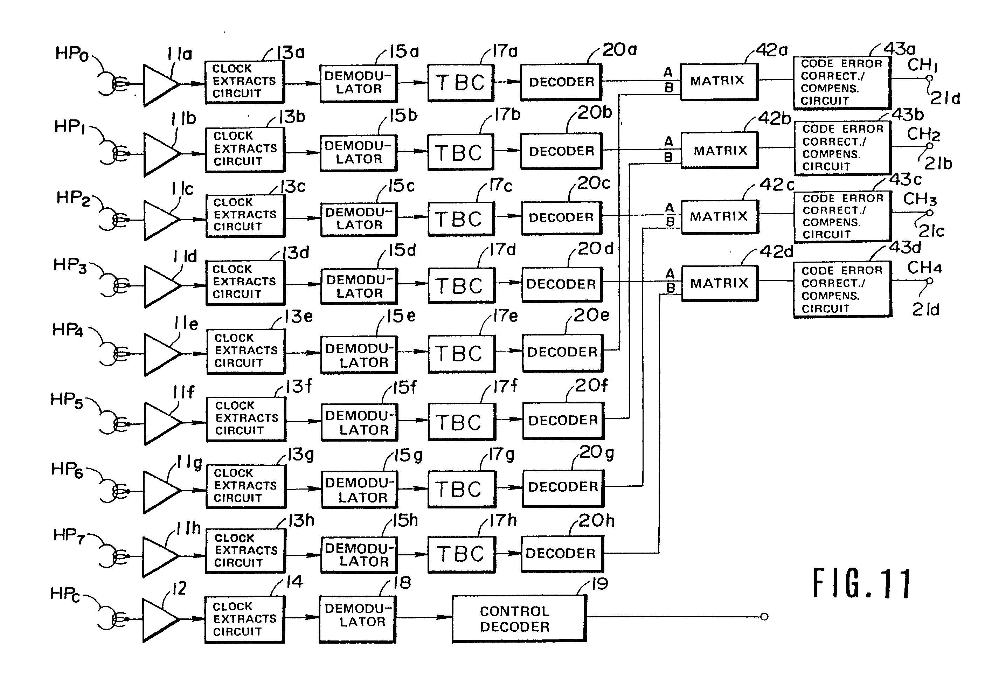

Figure 10 shows the recording system for the format B of Table 1, and Figure 11 shows the reproducing system.

Referring to Figure 10, audio PCM signals for CH1 to CH4 are supplied from input terminals 2a to 2d to matrix circuits 41a to 41d operating as switching and distributing means. The matrix circuits 41a to 41d perform a kind of matrix transformation, so that the respective words of the PCM signals are distributed in two tracks A and B per channel in accordance with a predetermined matrix pattern. An example of the word sequence for the respective PCM signals distributed by the matrix circuits into the tracks A and B is shown in Table 3 below, for the assumed word sequence W1, W2, W3, W4, . . ..

TABLE 3

| Tracks A | W1 | W2 | W5 | W6 | W9 | W10 | . . . |
|---|---|---|---|---|---|---|---|
| Tracks B | W3 | W4 | W7 | W8 | W11 | W12 | . . . |

In the example of the Table 3, two consecutive words of the input PCM signal are distributed to one track, so that the alternate odd and even relation of the original input PCM signal is maintained after distribution. This is because the data groups consisting of odd-numbered words are separated from the data groups consisting of even-numbered words at the time of interleaving at the encoder, these separate data series undergoing separate error correcting coding operations.

The following Table 4 shows another example of the distributing method capable of maintaining the even-odd sequence of the input PCM signals.

TABLE 4

| Tracks A | W1 | W4 | W5 | W8 | W9 | W12 | . . . |
|---|---|---|---|---|---|---|---|
| Tracks B | W3 | W2 | W7 | W6 | W11 | W10 | . . . |

The 2-track PCM signals from the matrix circuits 41a to 41d are supplied to eight encoders 3a to 3h associated respectively with the eight data tracks TD0 to TD7 in accordance with the B-format allotment shown in Table 2. Thus the track-A PCM signals of the respective matrix circuits 41a to 41d are supplied respectively to the encoders 3a to 3d, while the track-B PCM signals of the matrix circuits 41a to 41d are supplied respectively to the encoders 3e to 3h.

The encoders 3a to 3h operate in the same manner as the encoders 3a to 3h of Figure 4 and are similarly constructed, as shown by way of example in Figure 6. In this case, the word numbers of the PCM signals supplied to the encoders 3a to 3h shown in Figure 10 are regarded as being independent of the word numbers of the PCM signals of the original channels. For example, when the words W1, W2, W5, W6, . . . are supplied sequentially and successively as a result of distribution of the Table 3, the encoders 3a to 3h will perform the above-described interleaving and error correcting coding operations by regarding them as the first, second, third, fourth, words, etc. The encoding operation is effected in the respective encoders 3a to 3h as described in connection with Figures 6 to 8.

The data groups from the encoders 3a to 3h are supplied via modulators 5a to 5h and recording amplifiers 6a to 6h to recording heads HR0 to HR7, respectively.

The signals recorded on the control track TC are formed at the control encoder 8 on the basis of the indicating and timing signals from the terminal 7, and are supplied via the modulator 9 and the recording amplifier 10 to the recording control head HRc.

In the reproducing system shown in Figure 11, the outputs from the reproducing heads HP0 to HP7 and HPc are supplied via the reproducing amplifiers 11a to 11h and 12 to clock extracting circuits 13a to 13h and 14. The outputs from the clock extracting circuits 13a to 13h are supplied via the demodulators 15a to 15h to the TBCs 17a to 17h. The output from the extracting circuit 14 is supplied to the demodulator 18 where a reproducing control signal is generated and supplied to a control decoder 19. The output data groups from the TBCs 17a to 17b are supplied to the decoders 20a to 20h. The TBCs 17a to 17h and the decoders 20a to 20h operate in the same manner as described in connection with Figures 5 and 9.

The PCM signals from the decoders 20a to 20h appear in the same manner as the signals supplied from the above-described recording matrix circuits 41a to 41d to the encoders 3a to 3h and constitute 4-channel PCM signals with two of eight track signals corresponding to one channel. Inverse matrix circuits 42a to 42d are provided for performing the inverse operation of the matrix circuits 41a to 41d in order to synthesize two of eight track signals from the decoders 20a to 20h for converting them into 4-channel PCM signals. The inverse matrix circuits 42a to 42d are of substantially similar construction and operate in such a manner that the input signal words of the two tracks A and B are taken out in the order W1, W2, W3, W4, . . . as shown in Table 3 for forming one-channel PCM signals. The relation between the eight decoders 20a to 20h and the four inverse matrix circuits 42a to 42d is the same as that between the eight data tracks TD0 to TD7 of the format B of Table 2 and the four channels CH1 to CH4.

The outputs from the inverse matrix circuits 42a to 42d are supplied to coding error correction/compensation circuits 43a to 43d for interpolating the interval without signals, so as to make up the operation of the decoders 20a to 20h. This renders it possible to make an interpolation on the basis of the reproducing signals of the other track even when the reproducing signals of one track are absent for a prolonged time. The reproducing audio signals of the respective audio PCM signals are derived at output terminals 21a to 21d.

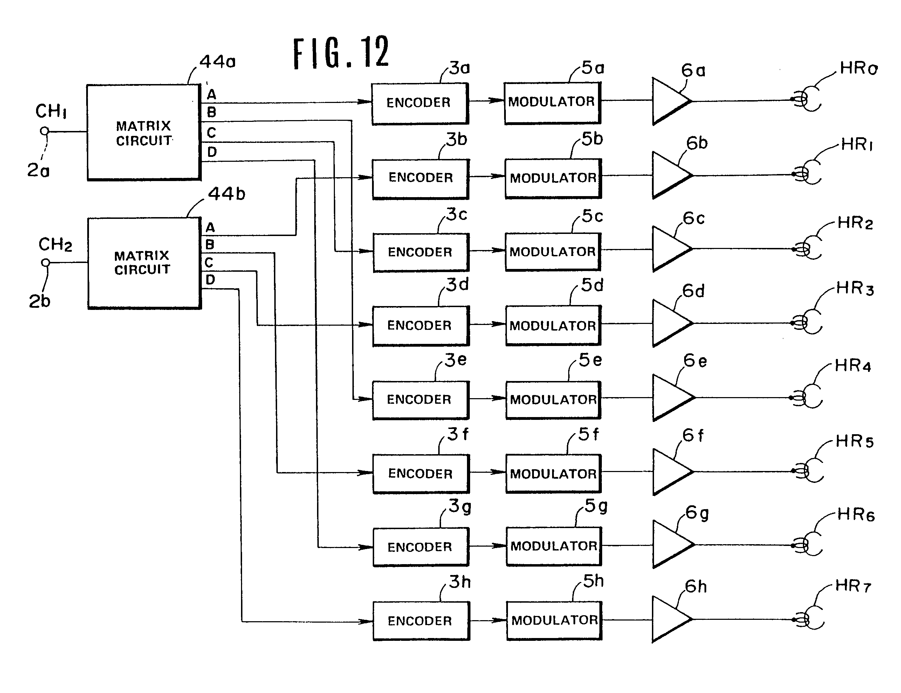

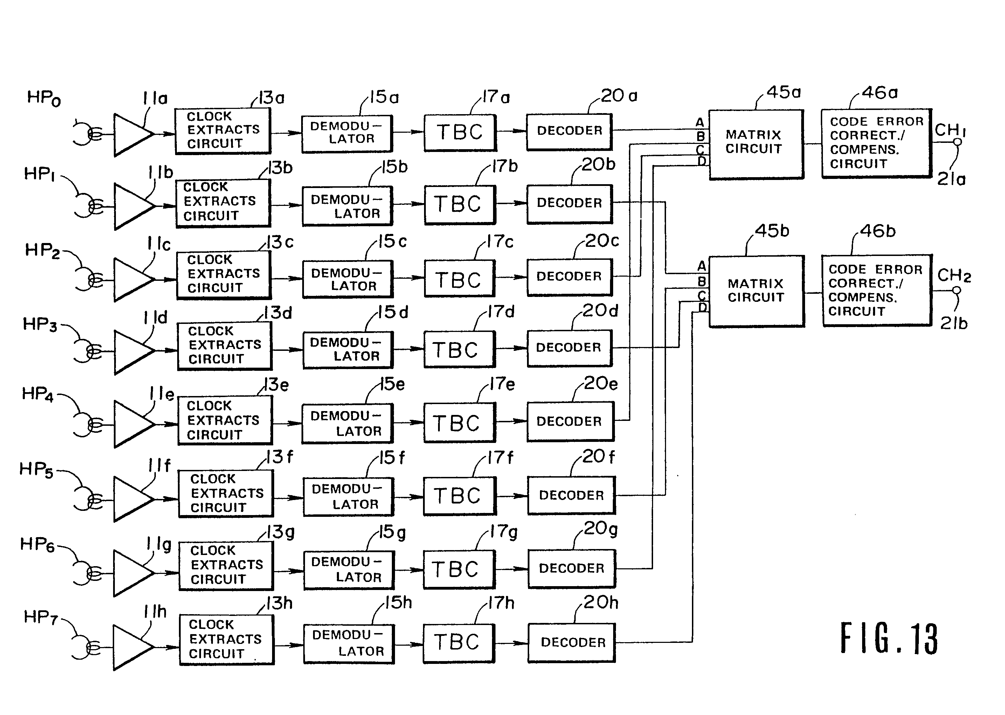

The above is an example of the recording and reproducing system of the PCM signals in accordance with the format B of the Tables 1 and 2. The recording and reproducing system of the format C will now be explained referring to Figures 12 and 13.

Figure 12 shows an example of the PCM signal recording system for format C. The PCM audio signals for the channels CH1 and CH2 are supplied from the input terminals 2a and 2b to matrix circuits 44a and 44b operating as switching distributing means. The matrix circuits 44a and 44b are constructed in a similar manner and operable to distribute sixteen words of the input PCM signal to four tracks A, B, C and D in accordance with a 4×4 matrix pattern. Table 5 below shows the signal word sequence of the tracks A, B, C and D distributed by the matrix circuits for the assumed word sequence W1, W2, W3, W4, . . ., of the input PCM signals.

TABLE 5

| Tracks A | W1 | W14 | W11 | W8 | W17 | W30 | W27 | W24 | . . . |
|---|---|---|---|---|---|---|---|---|---|
| Tracks B | W5 | W2 | W15 | W12 | W21 | W18 | W31 | W28 | . . . |
| Tracks C | W9 | W6 | W3 | W16 | W25 | W22 | W19 | W32 | . . . |
| Tracks D | W13 | W10 | W7 | W4 | W29 | W26 | W23 | W20 | . . . |

In the distributing method of Table 5, the odd-even alternating relation of the input PCM signals is maintained in the output signals of the respective tracks A, B, C and D, in such a manner that the interleaving operation, etc. in the succeeding encoder stage which considers the odd or even number of the words may be performed effectively.

It should be noted that 4×4 matrix patterns other than that shown in Table 5 above may be devised, so that a distributing method satisfying the alternating relation between the odd and even word numbers may be determined.

The 2-channel 8-track outputs CH1-A—CH2-D from the matrix circuits 44a and 44b are ultimately recorded in the data tracks TD0 to TD7 in accordance with the allotment for the format C shown in Table 2. Thus the eight encoders 3a to 3h are associated with eight data tracks TD0 to TD7, and the outputs of the tracks A, B, C and D of the first channel CH1 from the matrix circuit 44a are supplied respectively to encoders 3a, 3e, 3c and 3g, while the outputs of the tracks A, B, C and D of the second channel CH2 from the matrix circuit 44b are supplied respectively to encoders 3b, 3f, 3d and 3h. The encoders 3a to 3h may be constructed and operated in the same manner as the encoders shown in Figures 4 and 6 to 8, so that the above-described encoding operation is performed in the word sequence of the input signal (and thus independently of the word sequence of the original channel). The outputs from the encoders 3a to 3h are supplied via modulators 5a to 5h and recording amplifiers 6a to 6h to the recording heads HR0 to HR7 for recording and forming the aforementioned data tracks TD0 to TD7. The control signal recording system is similar to that shown in Figure 4 or Figure 10, so that the corresponding description is omitted.

Figure 13 shows an example of the construction of the reproducing system by means of which the data tracks TD0 to TD7 recorded in accordance with the format C are subjected to a reproducing operation for producing the original PCM signals of the two channels CH1 and CH2.

7

Referring to Figure 13, the reproducing outputs from the reproducing heads HP0 to HP7 facing the data tracks TD0 to TD7 are supplied via reproducing amplifiers 11a to 11h to the clock extracting circuits 13a to 13h. The outputs from the extracting circuits 13a to 13h are supplied via the demodulators 15a to 15h to TBCs 17a to 17b.

The outputs from the TBCs 17a to 17h are supplied to the decoders 20a to 20h performing the reverse of the operation of the aforementioned encoders. The outputs from the decoders 20a to 20h are the same as the signals supplied to the encoders 3a to 3h from the matrix circuits 44a and 44b of the recording system shown in Figure 12. For example, the outputs from the decoders 20a, 20e, 20c and 20g are in the sequence of the words of the tracks A, B, C and D shown in Table 5, and are supplied to an inverse matrix circuit 45a performing the reverse of the operation of the matrix circuit 44a. In addition, the outputs from the decoders 20b, 20f, 20d and 20h are supplied to an inverse matrix circuit 45b as signals of the respective tracks A, B, C and D for the second channel CH2. By means of the inverse matrix circuits 44a and 44b, the signal words of the respective tracks A, B, C and D of the channels CH1 and CH2 are taken in the word sequence W1, W2, W3 and W4, ... shown in Table 5 so as to be used as PCM signals of the respective channels. The outputs from the inverse matrix circuits 44a and 45b are supplied respectively to coding error correction/compensation circuits 46a and 46b where the track interval without signals is recovered by interpolation, so as to make up the operations of the decoders 20a to 20h. Thus, reproduced audio PCM signals for the channels CH1 and CH2 appear respectively at the output terminals 21a and 21b. The control signal reproducing system may be constructed as shown in Figure 5 or Figure 11, so corresponding description is omitted.

In the above-described embodiments of the present invention, there is no necessity for providing separate circuits for the eight encoders 3a to 3h or the eight decoders 20a to 20h corresponding to the eight tracks, as a high-speed operating or processing circuit may be used in a time-sharing configuration, so that the circuit operates as equivalent to eight encoders or eight decoders.

Furthermore, it may be so arranged that the above formats A, B and C are discriminated automatically so that, for example, the recording matrix circuits may be operated selectively as a function of the selected recording format, so that a predetermined one of discriminating bits C11 to C9 may be set in the control word as to indicate the selected recording format. It may also be so arranged that, during reproduction, the recording format may be discriminated from the discriminating bit, for automatically selecting the reproducing inverse matrix circuit, so that reproduction may be made in any of the aforementioned three recording formats.

From the foregoing it is seen that, in an embodiment of PCM signal recording method according to the present invention, the respective words of the PCM signal of one channel are distributed to the respective tracks in accordance with a predetermined distribution format, after which the signals are encoded by separate encoders for the respective tracks, so that error correction, etc. can be performed by the decoding operation on each track, while data interpolation can be effectively utilised in the event that a given recording track should fail to perform data reproduction for a prolonged time, for example, due to drop-out caused by tape defects. In addition, the allowable limit for error occurrence or the error correction capability may be enlarged in comparison with the case of using an encoder or a decoder for each channel, thus making it possible to perform PCM signal recording and reproduction of high quality.

**Claim**

A method of recording an input single-channel or multichannel PCM signal, the method comprising:
distributing the words of each channel (CH) of said input PCM signal to a plurality (A, B; A, B, C, D) of sub-channels;
in each said sub-channel encoding said words using a parity generator (3) for generating at least two kinds of parity words for correcting coding errors; and
recording said encoded words of each said channel on a respective recording track (TD) via a respective recording head (HR); characterized by:
distributing said words of said input PCM signal to said sub-channels in accordance with a predetermined matrix pattern whereby each said sub-channel receives equal numbers of odd and even numbered words and encodes each of the divided group of odd and even words; and
recording said tracks (TD) simultaneously through separate encoders (3).

**Patentanspruch**

Verfahren zum Aufzeichnen eines ein- oder mehrkanaligen PCM-Eingangssignals mit den Verfahrensschritten,
daß die Wörter jedes Kanals (CH) des PCM-Eingangssignals auf eine Mehrzahl von Subkanälen (A, B; A, B, C, D) verteilt werden,
daß die Wörter in jedem dieser Subkanäle unter Verwendung eines Paritätsgenerators (3) zur Erzeugung von wenigstens zwei Arten von Paritätswörtern zur Korrektur von Kodierfehlern kodiert werden,
und daß die kodierten Wörter jedes Kanals mit Hilfe jeweils eines Aufnahmekopfs (HR) in jeweils einer Aufzeichnungsspur (TD) aufgezeichnet werden, dadurch gekennzeichnet,

daß die Wörter des PCM-Eingangssignals entsprechend einem vorbestimmten Matrixmuster auf die genannten Subkanäle verteilt werden, wodurch jeder Subkanal eine gleiche Zahl von ungeradzahligen und geradzahligen Wörter aufnimmt und jede der so aufgeteilten Gruppen von ungeradzahligen und geradzahligen Wörter kodiert,

und daß die Spuren (TD) gleichzeitig über separate Kodierer (3) aufgezeichnet werden.

**Revendication**

Procédé d'enregistrement d'un signal PCM d'entrée à canal unique ou multicanal, le procédé comprenant:

la distribution des mots de chaque canal (CH) dudit signal PCM d'entrée à une pluralité (A, B; A, B, C, D) de sous-canaux;

l'encodage dans chacun desdits sous-canaux desdits mots en utilisant un générateur de parité (3) pour générer au moins deux types de mots de parité pour la correction des erreurs de codage; et

l'enregistrement desdits mots encodés de chaque dit canal sur une piste d'enregistrement respective (TD) via une tête d'enregistrement respective (HR); caractérisé par:

la distribution desdits mots dudit signal d'entrée PCM auxdits sous-canaux en fonction d'un modèle matriciel prédéterminé selon lequel chacun desdits sous-canaux reçoit des nombres égaux de mots d'ordre pair et impair et encode chacun des groupes divisés de mots pairs et impairs; et

l'enregistrement desdites pistes (TD) simultanément à travers des encodeurs séparés (3).

# FIG.1

| |
|---|
| TA₁ ( ANALOG ) |
| TD₀ ( DATA ) |
| TD₁ |
| TD₂ |
| TD₃ |
| TC ( CONTROL ) |
| TT ( TIME CODE ) |
| TD₄ |
| TD₅ |
| TD₆ |
| TD₇ |
| TA₂ ( ANALOG ) |

# FIG.2A

I SECTOR ( 4 BLOCKS )

I BLOCK

(TD)

| $[B_2\ B_1\ B_0]$ $=[S_0\ 0\ 0]$ | $[B_2\ B_1\ B_0]$ $=[S_0\ 0\ 1]$ | $[B_2\ B_1\ B_0]$ $=[S_0\ 1\ 0]$ | $[B_2\ B_1\ B_0]$ $=[S_0\ 1\ 1]$ |
|---|---|---|---|

(TC)

| | CONTROL WORD | SECTOR ADDRESS | CRC CODE |
|---|---|---|---|

4 BITS ← 16 BITS → ← 28 BITS → $S_0$ ← 16 BITS →

# FIG.2B

SYNC

DATA (16 WORDS)

| | | | | | | | | | | | | | | | | | CRC CODE |
|---|---|---|---|---|---|---|---|---|---|---|---|---|---|---|---|---|---|

16 BITS 16 BITS 16 BITS

# FIG.3

HR    HP    HR'

# FIG.4

CH₁ —○— 2a → | ENCODER 3a | → | MODULATOR 5a | → ▷ 6a ))) HR₀

CH₂ —○— 2b → | ENCODER 3b | → | MODULATOR 5b | → ▷ 6b ))) HR₁

CH₈ —○— 2h → | ENCODER 3h | → | MODULATOR 5h | → ▷ 6h ))) HR₇

—○— 7 → | CONTROL ENCODER 8 | → | MODULATOR 9 | → ▷ 10 ))) HR_C

# FIG.5

# FIG.6

# FIG.7

| SY NC | W''₁₂ | W''₁₁ | W''₈ | W''₇ | W''₄ | W''₃ | Q'₂ | Q'₁ | P''₂ | P''₁ | W''₁₀ | W''₉ | W''₆ | W''₅ | W₂ | W₁ | CRC CODE |

# FIG.8

# FIG.9

EP 0 127 687 B1

# FIG.10

FIG. 11

FIG. 12

HP0   11a   CLOCK EXTRACTS CIRCUIT 13a   DEMODU-LATOR 15a   TBC 17a   DECODER 20a

HP1   11b   CLOCK EXTRACTS CIRCUIT 13b   DEMODU-LATOR 15b   TBC 17b   DECODER 20b

HP2   11c   CLOCK EXTRACTS CIRCUIT 13c   DEMODU-LATOR 15c   TBC 17c   DECODER 20c

HP3   11d   CLOCK EXTRACTS CIRCUIT 13d   DEMODU-LATOR 15d   TBC 17d   DECODER 20d

HP4   11e   CLOCK EXTRACTS CIRCUIT 13e   DEMODU-LATOR 15e   TBC 17e   DECODER 20e

HP5   11f   CLOCK EXTRACTS CIRCUIT 13f   DEMODU-LATOR 15f   TBC 17f   DECODER 20f

HP6   11g   CLOCK EXTRACTS CIRCUIT 13g   DEMODU-LATOR 15g   TBC 17g   DECODER 20g

HP7   11h   CLOCK EXTRACTS CIRCUIT 13h   DEMODU-LATOR 15h   TBC 17h   DECODER 20h

A B C D   MATRIX CIRCUIT 45a   CODE ERROR CORRECT./ COMPENS. CIRCUIT 46a   CH1   21a

A B C D   MATRIX CIRCUIT 45b   CODE ERROR CORRECT./ COMPENS. CIRCUIT 46b   CH2   21b

FIG. 13

EP 0 127 687 B1